# EUROPEAN PATENT APPLICATION

(11) **EP 2 911 055 A1**
(43) Date of publication of application: **26.08.2015**
(21) Application number: 12886726.4
(22) Date of filing: 18.10.2012
(51) Int. Cl.: G06F 9/50

(54) **PARALLEL COMPUTING DEVICE**

(71) Applicant: Toyota Jidosha Kabushiki Kaisha, Toyota-shi, Aichi 471-8571 (JP)
(72) Inventor: WATANABE, Satoru, Toyota-shi Aichi 471-8571 (JP); SATA, Kota, Toyota-shi Aichi 471-8571 (JP); KAKO, Junichi, Toyota-shi Aichi 471-8571 (JP)
(74) Representative: Intès, Didier Gérard André
(86) International application number: PCT/JP2012/076986
(87) International publication number: WO 2014/061141

(57) **Abstract**

The present invention relates to a multi-core parallel computing device that repeatedly processes a plurality of tasks having a restricted processing completion time using one or more cores having a variable operation frequency. When activating a new core and allocating the plurality of tasks to the new core and an operating core, the parallel computing device according to the present invention increases the operation frequency of the operating core.

## Description

### Technical Field

The present invention relates to a multi-core parallel computing device. In particular, it relates to a multi-core parallel computing device that repeatedly processes a plurality of tasks having a restricted processing completion time using one or more cores having a variable operation frequency.

### Background Art

When a computing device is provided with a CPU core having a variable operation frequency, the computation capacity, or more specifically the computation amount per unit time, of the computing device can be increased by increasing the operation frequency of the core. However, the power consumed by the core increases as the operation frequency of the core increases. In addition, although the relationship between the operation frequency and the computation capacity of the core is substantially a linear relationship, the rate of change of the power consumption with a change of the operating frequency increases as the operation frequency increases. Therefore, in terms of the viewpoint of the computation capacity for the power consumption, that is, in terms of power efficiency, the performance can be improved only to a limited extent by increasing the operation frequency.

In recent years, a multi-core parallel computing device, which has a plurality of cores mounted on one semiconductor chip, has been attracting attention. When there is a plurality of tasks to be processed, the multi-core parallel computing device can reduce the operation load on each core by distributing the tasks among a plurality of cores and performing parallel computation. Therefore, for the same computation amount, the operation frequency of each core of the multi-core parallel computing device is lower than the operation frequency of the core of a single-core computing device. Since the power efficiency of the core decreases as the operation frequency increases, the power efficiency of the whole of the multi-core parallel computing device can be improved compared with the single-core computing device.

However, the theory about the power efficiency of the computing device described above does not always hold true. In practice, when the multi-core parallel computing device performs parallel computation of a plurality of tasks, an overhead due to communication between cores occurs in addition to the computation time required for processing of the tasks. Therefore, for the same number of tasks to be processed, the total computation time required for processing of the tasks is longer in the multi-core parallel computing device than in the single-core computing device. When a large amount of computation is required for processing of the tasks, the ratio of the overhead to the total processing time is low, so that the multi-core parallel computing device can achieve a higher power efficiency than the single-core computing device as described above. However, when a small amount of computation is required for processing of the tasks, the ratio of the overhead to the total processing time is high, so that the single-core computing device can achieve a higher power efficiency than the multi-core parallel computing device.

While comparison between the single-core computing device and the multi-core parallel computing device has been described above, the problem with the power efficiency described above also arises when the number of operating cores is changed in the multi-core parallel computing device. This is because, when the number of operating cores is changed in the multi-core parallel computing device, an overhead due to communication between cores increases or decreases depending on the number of operating cores. In this regard, the parallel computing device according to prior art disclosed in Japanese Patent Laid-Open No. 2006-344162 is designed to determine the number of operating cores and the operation frequency of the cores by taking the overhead due to the parallel processing into consideration so that the total power consumption of a plurality of cores is minimized.

However, the prior-art computing device has a problem. That is, a missing task can occur. When a core is newly activated, the activation takes some time. Therefore, there is a time lag due to the core activation processing from when a need to increase the number of operating cores occurs to when the new core actually starts operating and the tasks are allocated to the plurality of cores including the new core. During the time lag, all the tasks are processed by the cores that are already operating. A task to be repeatedly processed has a restricted processing completion time. Therefore, depending on the relationship between the required processing time including the overhead and the computation time and the required processing completion time, some of the tasks may be unable to be processed in the processing completion time.

Furthermore, a missing task can also occur when any of the operating cores is stopped. When a core is to be stopped, information required for the computation is transmitted from the core to be stopped to the core that continues operating. Therefore, when a core is to be stopped in a computation cycle, an overhead occurs due to the communication between the cores involved in the stop processing, and the overhead is added to the computation time of the core that continues operating. Therefore, depending on the relationship between the required processing time including the overhead and the computation time and the required processing completion time, some of the tasks may be unable to be processed in the processing completion time.

### Citation List

### Patent Literature

Patent Literature 1: Japanese Patent Laid-Open No. 2006-344162

### Summary of Invention

An object of the present invention is to prevent a missing task that can occur when the number of cores used for processing of a plurality of tasks is increased or decreased in a multi-core parallel computing device that repeatedly processes a plurality of tasks having a restricted processing completion time using one or more cores having a variable operation frequency. In order to attain the object, the present invention provides multi-core parallel computing devices described below.

When activating a new core and allocating tasks to be processed to the new core and an operating core, a first parallel computing device provided by the present invention increases the operation frequency of the operating core. Since the computation capacity of the operating core increases as the operation frequency increases, all the tasks can be processed in the required processing completion time even if the required processing completion time decreases or even if the overhead increases due to the communication between the cores involved in the activation of the new core.

When activating the new core, the parallel computing device preferably allocates the tasks to be processed to the new core and the operating core in a cycle subsequent to a cycle in which the new core is activated. And the parallel computing device preferably temporarily increases the operation frequency of the operating core in the cycle in which the new core is activated. In this case, when the number of cores used for task processing is increased, a missing task can be prevented while minimizing the increase of the power consumption by reducing the period in which the operation frequency of the core is increased.

Alternatively, when activating the new core, the parallel computing device preferably allocates the plurality of tasks to be processed to the new core and the operating core in the activation cycle, and temporarily increases the operation frequency of the operating core in the activation cycle. More preferably, the parallel computing device temporarily increases not only the operation frequency of the operating core but also the operation frequency of the new core after the new core is activated in the activation cycle. Thus, when the number of cores used for task processing is increased, a missing task can be prevented while minimizing the increase of the power consumption by reducing the period in which the operation frequency of the core is increased.

When stopping any of operating cores and allocating tasks to be processed to a core that continues operating, a second parallel computing device provided by the present invention increases the operation frequency of the core that continues operating. Since the computation capacity of the core that continues operating increases as the operation frequency increases, all the tasks can be processed in the required processing completion time even if an overhead occurs due to the communication between the cores that occurs when the any of the cores is stopped.

When stopping any of the cores, the parallel computing device preferably allocates the tasks to be processed to the core that continues operating in the cycle in which the any of the cores is stopped. And the parallel computing device preferably temporarily increases the operation frequency of the core that continues operating in the cycle in which the any of the cores is stopped. Thus, when the number of cores used for task processing is decreased, a missing task can be prevented while minimizing the increase of the power consumption by reducing the period in which the operation frequency of the core is increased.

### Brief Description of Drawings

[Figure 1] Figure 1 is a diagram showing an overview of a configuration of a parallel computing device according to a first embodiment of the present invention.
[Figure 2] Figure 2 is a graph showing frequency and power consumption characteristics of a core having a variable operation frequency.
[Figure 3] Figure 3 is a graph showing a relationship between a required computation amount per unit time and a required operation frequency of a multi-core parallel computing device.
[Figure 4] Figure 4 shows graphs for comparison between a total power consumption at the time when one core is used and a total power consumption at the time when two cores are used when the operation load is high.
[Figure 5] Figure 5 shows graphs for comparison between the total power consumption at the time when one core is used and the total power consumption at the time when two cores are used when the operation load is low.
[Figure 6] Figure 6 is a graph showing relationships between the total power consumption and the required operation frequency for comparison between the time when one core is used and the time when two cores are used.
[Figure 7] Figure 7 is a diagram for illustrating a problem that can occur when the number of operating cores is increased from 1 to 2.
[Figure 8] Figure 8 is a diagram for illustrating a problem that can occur when the number of cores is decreased from 2 to 1.
[Figure 9] Figure 9 is a diagram for illustrating a controlling method used when an additional core is activated according to the first embodiment of the present invention.
[Figure 10] Figure 10 is a flowchart showing a routine performed by the parallel computing device according to the first embodiment of the present invention when an additional core is activated.
[Figure 11] Figure 11 is a diagram for illustrating a controlling method used when any of cores is stopped according to the first embodiment of the present invention.
[Figure 12] Figure 12 is a flowchart showing a routine performed by the parallel computing device according to the first embodiment of the present invention when any of cores is stopped.
[Figure 13] Figure 13 is a diagram for illustrating a controlling method used when an additional core is activated according to a second embodiment of the present invention.
[Figure 14] Figure 14 is a flowchart showing a routine performed by a parallel computing device according to the second embodiment when an additional core is activated.

### Description of Embodiments

### First Embodiment

A parallel computing device according to a first embodiment of the present invention will be described with reference to the drawings.

The parallel computing device according to this embodiment is a parallel computing device that calculates a control target value for an actuator involved in engine control using a multi-core processor. The type or structure of the automobile engine to which the parallel computing device according to this embodiment can be applied is not particularly limited. For example, the parallel computing device according to this embodiment can be applied to various types of automobile engines, such as a gasoline engine, a diesel engine, a naturally aspirated engine, and a supercharged engine. The kind of the control target value or the number of control target values calculated by the parallel computing device according to this embodiment is not particularly limited. For example, the parallel computing device according to this embodiment can be applied to calculation of a control target value(s) for various kinds of actuators, such as a throttle, an ignition device, a variable valve timing device, an injector, and a waist gate valve.

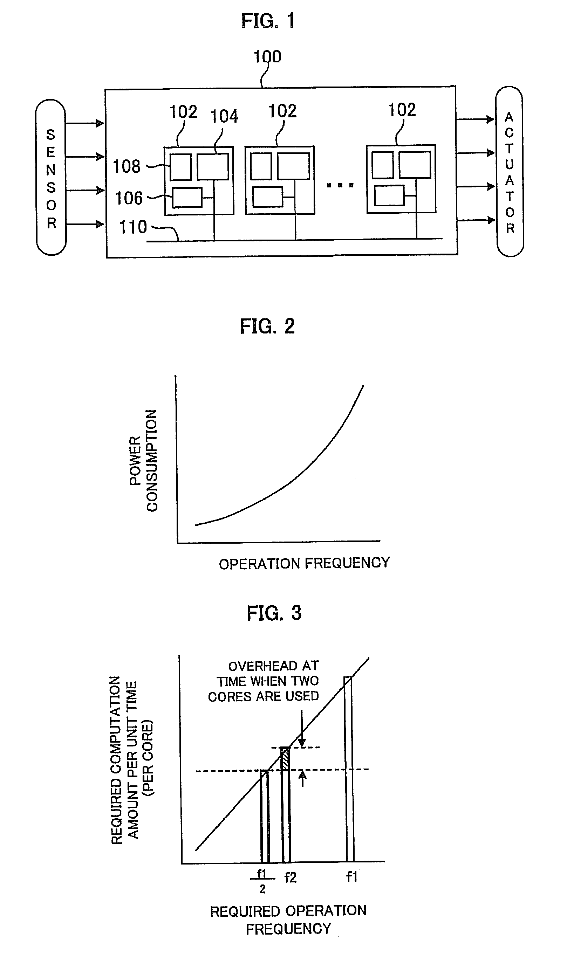

Figure 1 is a diagram showing an overview of a configuration of the parallel computing device according to this embodiment. A parallel computing device 100 receives various kinds of information concerning an operational state or operational environment of an engine from a plurality of sensors provided in the engine. Based on the information, the parallel computing device 100 calculates a control target value to be indicated to each actuator. The parallel computing device 100 is a multi-core parallel computing device that has a plurality of cores 102. Each core 102 comprises a CPU 104 provided with a cache and a local memory 106. The local memory 106 stores various kinds of programs executed by the CPU 104 and various kinds of data used in execution of the programs. The cores 102 are interconnected by a bus 110. The cores 102 communicate with each other via the bus 110. Although not shown, a shared memory, which is shared among the cores, is also connected to the bus 110. Each core 102 is further provided with a frequency and voltage controlling unit 108 that can control a driving voltage to change an operation frequency.

Figure 2 is a graph showing frequency and power consumption characteristics of the cores of the parallel computing device according to this embodiment. The power consumption of the cores tends to increase as the operation frequency increases. The rate of change of the power consumption with a change of the operation frequency increases as the operation frequency increases.

Figure 3 is a graph showing a relationship between the required computation amount per unit time per core and the required operation frequency. The required computation amount per unit time is determined by the number of tasks to be processed and the required processing completion time. In engine control, a plurality of tasks is repeatedly performed in each combustion cycle in order to calculate the control target values of various actuators. That is, the cycle of task processing in engine control agrees with the combustion cycle of the engine. Therefore, in engine control, processings of all the tasks need to be completed in one combustion cycle. That is, the processing completion time of the plurality of tasks involved in engine control is restricted by the duration of the combustion cycle.

As shown in Figure 3, if the number of cores used for calculation is fixed, the relationship between the required computation amount per unit time and the required operation frequency is a linear relationship. It is supposed that the required operation frequency required when the required amount of computation is performed by one core is f1. If the same amount of computation is performed by two cores, the computation amount per core is reduced by half. However, the required operation frequency for each core is not reduced to f1/2, which is a half of f1, but is reduced to f2 that is higher than f1/2. This is because, when correlated computations are distributed between two cores, the two cores need to communicate with each other to exchange information used in the computation, and an overhead occurs due to the communication between the cores. The apparent required computation amount for each core increases by the overhead, and, because of the increase of the apparent required computation amount, the resulting required operation frequency is f2, which is higher than f1/2.

If the number of cores is increased from 1 to 2, the power consumption is that of the two cores. However, if the power consumption per core is equal to or lower than a half of the power consumption at the time when one core is used, the total power consumption at the time when two cores are used is lower than the total power consumption at the time when one core is used, and the parallel computation can advantageously provide a reduction of the power consumption. The power consumption is determined by the operation frequency. The total power consumption at the time when one core is used is the power consumption at the frequency f1 in the frequency and power consumption characteristics, and the total power consumption at the time when two cores are used is twice the power consumption at the frequency f2 in the frequency and power consumption characteristics. Which of the total power consumption at the time when one core is used and the total power consumption at the time when two cores are used is lower depends on the required computation amount per unit time, that is, the magnitude of the operation load on the parallel computing device.

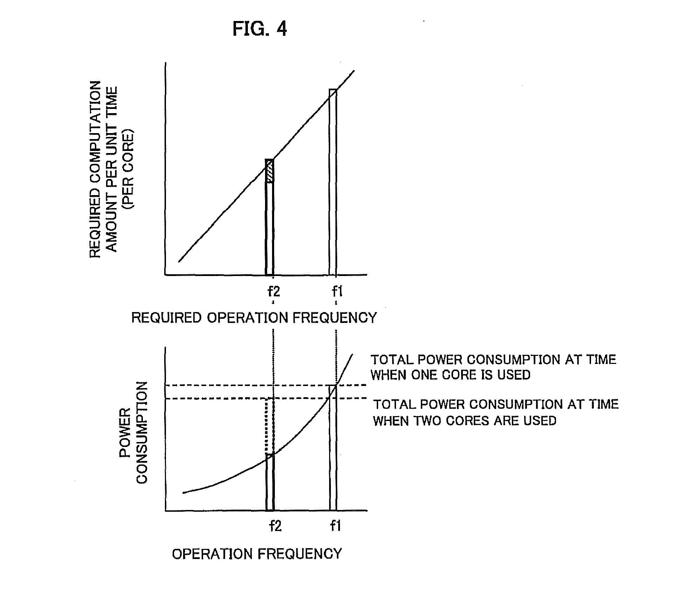

Figure 4 shows graphs for comparison between the total power consumption at the time when one core is used and the total power consumption at the time when two cores are used when the operation load is high. According to the frequency and power consumption characteristics of the cores, the rate of change of the power consumption with a change of the operation frequency increases as the operation frequency increases. Therefore, when the operation load is high, and the operation frequency f1 is high, the power consumption at the operation frequency f2, is lower than a half of the power consumption at the operation frequency f1, as shown in Figure 4. Therefore, when the operation load is high, the total power consumption at the time when two cores are used tends to be lower than the total power consumption at the time when one core is used.

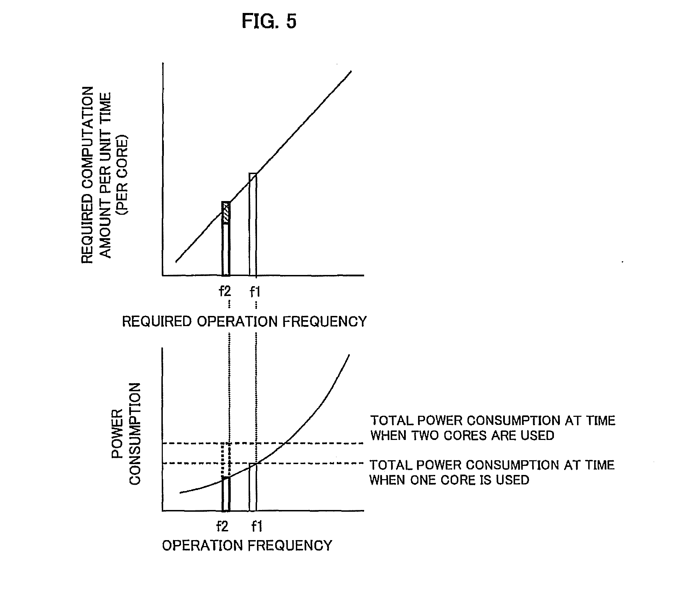

Figure 5 shows graphs for comparison between the total power consumption at the time when one core is used and the total power consumption at the time when two cores are used when the operation load is low. When the operation load is low, and the operation frequency f1 is low, the power consumption at the operation frequency f2 is higher than a half of the power consumption at the operation frequency f1, as shown in Figure 5. Therefore, when the operation load is low, the total power consumption at the time when one core is used tends to be lower than the total power consumption at the time when two cores are used.

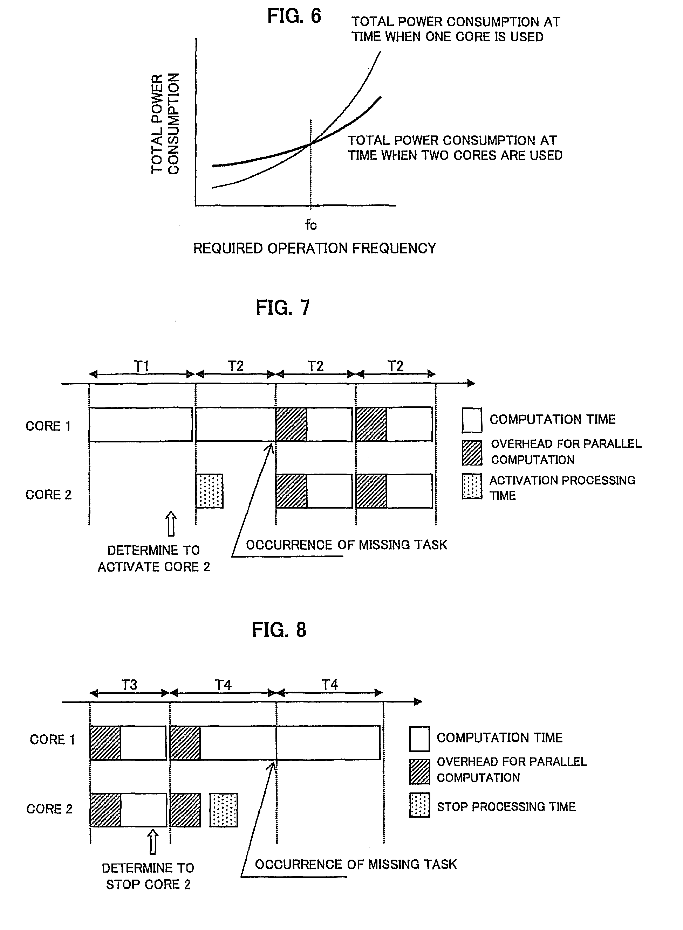

Figure 6 is a graph showing relationships between the total power consumption and the required operation frequency for comparison between the time when one core is used and the time when two cores are used. The required operation frequency in this graph is the operation frequency required in the case where a required amount of computation per unit time is performed by one core. The power consumed in this case is the total power consumption at the time when one core is used. The power consumed in the case where the number of cores used for computation is increased from one to two and the same required amount of computation is performed by the two cores is the total power consumption at the time when two cores are used. As shown in this graph, the total power consumption at the time when one core is used and the total power consumption at the time when two cores are used are equal to each other at a threshold frequency fc. If the operation frequency is higher than the threshold frequency fc, the total power consumption at the time when two cores are used is lower than the total power consumption at the time when one core is used. On the other hand, if the operation frequency is lower than the threshold frequency fc, the total power consumption at the time when one core is used is lower than the total power consumption at the time when two cores are used.

As can be seen from the above description, if the parallel computing device stores the threshold frequency fc in advance and determines the number of cores based on whether the required operation frequency is higher or lower than the threshold frequency fc, the power consumption of the parallel computing device can be reduced. More specifically, if the required operation frequency is higher than the threshold frequency fc, parallel computation using two cores can be selected to reduce the power consumption. On the other hand, if the required operation frequency is lower than the threshold frequency fc, the power consumption can be reduced by performing computation using one core rather than by performing parallel computation using two cores.

However, simple switching of the number of cores poses a problem. The problem will be described with reference to Figures 7 and 8. Note that, however, the problem described below is a problem that occurred in a parallel computing device (according to a comparative example) investigated in the course of development of the present invention. The parallel computing device according to this embodiment is designed to solve the problem as described later.

Figure 7 is a diagram for illustrating a problem that occurs when an additional core (core 2) is activated while a core (core 1) is processing tasks. The parallel computing device calculates the duration of the subsequent combustion cycle based on the engine speed and the rate of change thereof. Here, a case where the current combustion cycle has a duration T1 and the subsequent combustion cycle has a duration T2 that is shorter than the duration T1 will be discussed. The parallel computing device calculates the computation amount per unit time on the assumption that the duration of the combustion cycle is the processing completion time, and calculates the required operation frequency from the computation amount per unit time. That is, as the required operation frequency, the parallel computing device calculates an operation frequency that minimizes the power consumption within a range in which the restriction on the processing completion time is met. If the computation amount of the tasks to be processed is fixed, when the duration of the combustion cycle, which is the processing completion time, is reduced from T1 to T2, the computation amount per unit time increases, and the required operation frequency increases. When it is expected that the required operation frequency is higher than the threshold frequency fc, the parallel computing device determines to activate the core 2, and an activation processing for the core 2 is performed in the subsequent cycle.

Since the core 2 is activated in addition to the core 1, the tasks to be processed are distributed between the two cores. Since correlated tasks are distributed, an overhead occurs due to the communication between the cores, and the operation frequencies of the cores are determined so that the total sum of the overhead and the computation time required for task processing agrees with the combustion cycle duration T2. When the required operation frequency at the time when one core is used is higher than the threshold frequency fc, by switching to the parallel computation using two cores, the power consumption of the whole of the parallel computing device can be reduced compared with the case where the tasks are processed by one core.

However, the parallel computation has the advantage described above only in the cycles after the core 2 is activated. In practice, the core 2 is activated in the cycle subsequent to the cycle in which the activation processing is performed. Therefore, in the cycle in which the activation processing for the core 2 is performed, the core 1 that is already in operation has to process all the tasks. However, the operation frequency of the core 1 is optimized for the preceding processing completion time, and therefore, the core 1 cannot process all the tasks in the current processing completion time. The tasks are performed in order of priority, and therefore, a task with a lower priority remains unprocessed. That is, when switching from the computation using one core to the parallel computation using two cores occurs, a missing task occurs if the additional core is just simply activated.

Figure 8 is a diagram for illustrating a problem that occurs when one (core 2) of two cores is stopped while the two cores are processing tasks by parallel computation. Here, a case where the current combustion cycle has a duration T3 and the subsequent combustion cycle has a duration T4 that is longer than the duration T3 will be discussed. If the computation amount of the tasks to be processed is fixed, when the duration of the combustion cycle, which is the processing completion time, is increased from T3 to T4, the computation amount per unit time decreases, and the required operation frequency decreases. The parallel computing device calculates the required operation frequency in the case where all the tasks are processed by one core from the computation amount required for task processing and the processing completion time. When it is expected that the required operation frequency at the time when one core is used is lower than the threshold frequency fc, the parallel computing device determines to stop the core 2, and a stop processing for the core 2 is performed in the subsequent cycle.

Since the core 2 is stopped, the tasks to be processed are allocated to the core 1 that continues operating. When only one core is used for task processing, any overhead does not occur due to the communication between cores, so that the parallel computing device determines the operation frequency of the core 1 so that the computation time required for task processing agrees with the combustion cycle time T4. When the required operation frequency at the time when one core is used is lower than the threshold frequency fc, by switching to the computation using one core, the power consumption of the whole of the parallel computing device can be reduced compared with the case where parallel computation using two cores is performed.

However, even though only the core 1 continues operating, the overhead due to the communication between the cores occurs in the cycle in which the core 2 is stopped. When the core 2 is to be stopped, information required for processing of the tasks having been allocated to the core 2 has to be transferred to the core 1 before the core 2 is stopped. Therefore, in the cycle in which the core 2 is stopped, communication between the cores occurs to transfer the information, and the overhead due to the communication between the cores is added to the computation time of the core 1. However, the parallel computing device has designated the operation frequency that minimizes the power consumption in the combustion cycle duration T4 as the required operation frequency of the core 1. Therefore, if the overhead is added to the computation time, some of the tasks with lower priorities cannot be processed in the processing completion time. That is, when switching from the parallel computation using two cores to the single-core computation using one core occurs, a missing task occurs if the unnecessary core is just simply stopped.

In order to solve the problems described above, the parallel computing device according to this embodiment is designed as described below.

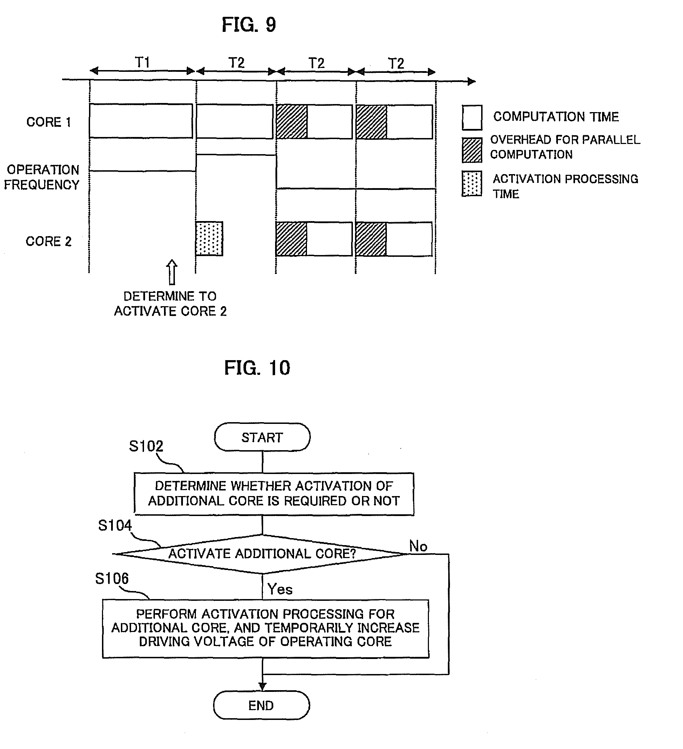

First, a controlling method designed to prevent a missing task that can occur when an additional core is activated will be described. Figure 9 is a diagram for illustrating a controlling method used when the parallel computing device according to this embodiment activates an additional core. Here, a case where an additional core (core 2) is newly activated while only one core (core 1) is processing tasks will be described as an example in association with the comparative example described above with reference to Figure 7.

The parallel computing device according to this embodiment calculates the required operation frequency of the subsequent cycle from the expected duration T2 of the subsequent combustion cycle. And the parallel computing device determines whether to activate the core 2 or not based on whether the required operation frequency of the subsequent cycle is higher than the threshold frequency fc or not. If the required operation frequency is higher than the threshold frequency fc, the activation processing for the core 2 is performed in the subsequent cycle.

The controlling method by the parallel computing device according to this embodiment differs from that in the comparative example in the setting of the operation frequency of the core 1 in the cycle in which the activation processing for the core 2 is performed (referred to as an additional core activation cycle, hereinafter). The cycle in which the tasks are allocated to the cores 1 and 2 and the parallel computation by the two cores starts is the cycle subsequent to the additional core activation cycle. In the additional core activation cycle, the single-core computation continues being performed by the core 1. However, the processing completion time required in the additional core activation cycle is the time that corresponds to the combustion cycle duration T2, rather than the combustion cycle duration T1. Since the combustion cycle duration T2 is shorter than the combustion cycle duration T1, the processing completion time required in the additional core activation cycle is shorter than the processing completion time of the preceding cycle. In view of this, in the additional core activation cycle, the parallel computing device according to this embodiment does not make the core 1 operate at the operation frequency optimized for the combustion cycle duration T1 but makes the core 1 operate at a higher operation frequency.

The computational capacity of the core 1 increases as the operation frequency increases. Therefore, even if the processing completion time required for the core 1 is reduced, all the tasks can be processed in that required processing completion time. In other words, the parallel computing device according to this embodiment can prevent a missing task when the number of cores used for task processing is increased. Note that the operation frequency of the core 1 in the additional core activation cycle is preferably the operation frequency optimized for the expected combustion cycle duration T2, that is, the operation frequency that minimizes the power consumption within a range in which the processing completion time does not exceed the combustion cycle duration T2.

The controlling method used when an additional core is activated described above is implemented by the parallel computing device according to this embodiment performing the routine shown in the flowchart of Figure 10. The routine is performed when a single-core computation is performed by one core.

In the flowchart of Figure 10, in the first step S102, it is determined whether activation of an additional core is required or not. In the determination of whether activation of an additional core is required or not, the computation amount of the tasks to be processed in the subsequent combustion cycle and the duration of the subsequent combustion cycle expected from the engine speed are used as information. The required computation amount per unit time in the case where all the tasks are processed by one core is calculated based on the information, and the required operation frequency is calculated from the computation amount per unit time. A criterion for determining whether activation of an additional core is required or not is whether the required operation frequency is higher than the threshold frequency fc or not.

In step S104, it is determined whether to activate an additional core or not based on the determination criterion described above. When an additional core is to be activated, the processing of step S106 is performed.

In step S106, in the cycle subsequent to the cycle in which it is determined whether activation of an additional core is required or not, the activation processing for an additional core is performed. In the same cycle, the driving voltage of the operating core is temporarily increased. Since the operation frequency of the core is proportional to the driving voltage, the operation frequency increases as the driving voltage increases. Since the computational capacity of the core increases as the operation frequency increases, processing of all the tasks can be completed in the required processing completion time.

If no additional core is to be activated, the processing of step S106 described above is skipped. In that case, only the one operating core continues processing the tasks. In the cycles subsequent to the additional core activation cycle, the tasks are allocated to the two cores, and the tasks are processed by parallel computation by the two cores. In the parallel computation, the operation frequency of each core can be reduced, so that the driving voltage of each core can also be reduced. Therefore, the period in which the driving voltage and the operation frequency are increased when an additional core is activated can be at most the period of the additional core activation cycle, that is, a temporary period.

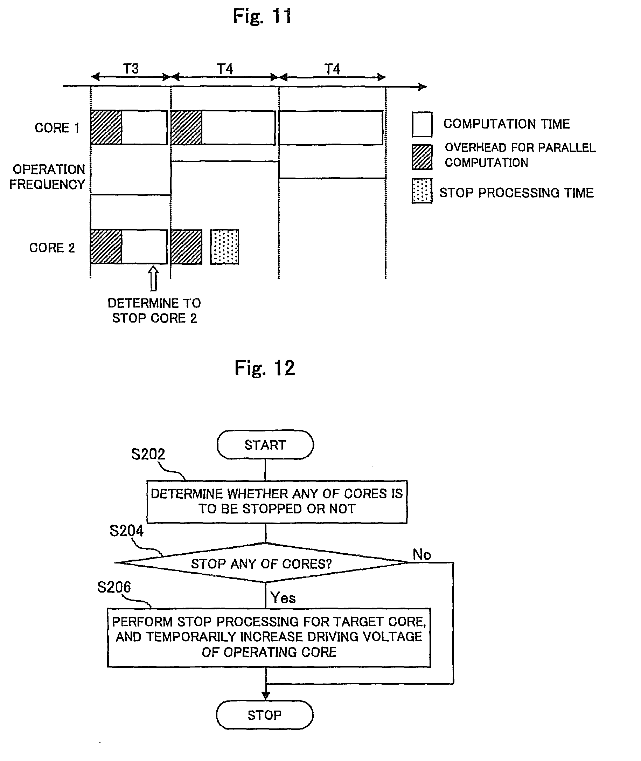

Next, a controlling method designed to prevent a missing task that can occur when any of cores is stopped will be described. Figure 11 is a diagram for illustrating a controlling method used when the parallel computing device according to this embodiment stops any of cores. Here, a case where one (core 2) of two cores is stopped while the two cores are processing tasks by parallel computation will be described as an example in association with the comparative example described above with reference to Figure 8.

The parallel computing device according to this embodiment calculates the required operation frequency in the case where only the core 1 operates from the expected duration T4 of the subsequent combustion cycle. And the parallel computing device determines whether to stop the core 2 or not based on whether the required operation frequency of the subsequent cycle is lower than the threshold frequency fc or not. If the required operation frequency is lower than the threshold frequency fc, the stop processing for the core 2 is performed in the subsequent cycle.

The controlling method by the parallel computing device according to this embodiment differs from that in the comparative example in the setting of the operation frequency of the core 1 in the cycle in which the stop processing for the core 2 is performed (referred to as a core stop cycle, hereinafter). In the core stop cycle, the tasks are allocated only to the core 1, and switching from the parallel computation by the cores 1 and 2 to the single-core computation by the core 1 occurs. Therefore, the number of tasks allocated to the core 1 is increased compared with during the parallel computation, and the operation frequency required for the core 1 is increased compared with during the parallel computation. In addition, in the core stop cycle, an overhead occurs in order to transfer information from the core 2 to be stopped to the core 1 that continues operating, as in the parallel computation. Therefore, the apparent computation amount of the core 1 in the core stop cycle increases by the overhead compared with the normal single-core computation. In view of this, in the core stop cycle, the parallel computing device according to this embodiment does not make the core 1 operate at the operation frequency optimized for the combustion cycle duration T4 but makes the core 1 operate at a higher operation frequency.

The computational capacity of the core 1 increases as the operation frequency increases. Therefore, even if the apparent computation amount increases by the overhead due to the stop processing for the core 2, all the tasks can be processed in the required processing completion time determined from the combustion cycle duration T4. In other words, the parallel computing device according to this embodiment can prevent a missing task when the number of cores used for task processing is decreased.

The controlling method used when any of cores is stopped described above is implemented by the parallel computing device according to this embodiment performing the routine shown in the flowchart of Figure 12. The routine is performed when the parallel computation by two cores is performed.

In the flowchart of Figure 12, in the first step S202, it is determined whether any of the operating cores needs to be stopped or not. In the determination of whether any of the cores needs to be stopped or not, the computation amount of the tasks to be processed in the subsequent combustion cycle and the duration of the subsequent combustion cycle expected from the engine speed are used as information. The required computation amount per unit time in the case where all the tasks are processed by one core is calculated based on the information, and the required operation frequency is calculated from the computation amount per unit time. A criterion for determining whether any of the cores needs to be stopped or not is whether the required operation frequency is lower than the threshold frequency fc or not.

In step S204, it is determined whether to stop any of the cores or not based on the determination criterion described above. When any of the cores is to be stopped, the processing of step S206 is performed.

In step S206, in the cycle subsequent to the cycle in which it is determined whether any of the cores needs to be stopped or not, the stop processing for that core is performed. In the same cycle, the driving voltage of the core that continues operating is temporarily increased to increase the operation frequency of the core. Since the computational capacity of the core increases as the operation frequency increases, processing of all the tasks can be completed in the required processing completion time.

If any of the cores is not to be stopped, the processing of step S206 described above is skipped. In that case, the parallel computation by the two cores continues. In the cycles subsequent to the core stop cycle, the tasks are processed by single-core computation by the core that is still operating. The overhead due to stopping of a core occurs only in the core stop cycle, so that in the cycles subsequent to the core stop cycle, the operation frequency of the core can be the minimum operation frequency determined from the computation amount required for task processing and the required processing completion time. Therefore, the period in which the driving voltage and the operation frequency are increased when any of the cores is stopped can be at most the period of the core stop cycle, that is, a temporary period.

### Second Embodiment

Next, a parallel computing device according to a second embodiment of the present invention will be described with reference to the drawings.

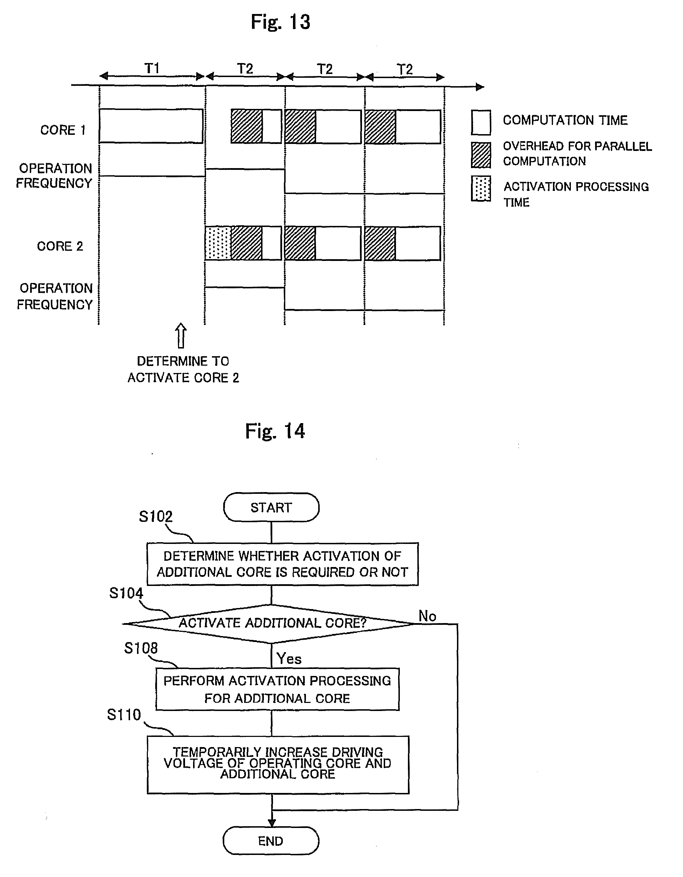

The parallel computing device according to this embodiment differs from the parallel computing device according to the first embodiment in the controlling method used to prevent a missing task that can occur when an additional core is activated. Figure 13 is a diagram for illustrating the controlling method used when the parallel computing device according to this embodiment activates an additional core. Here, a case where an additional core (core 2) is newly activated while only one core (core 1) is processing tasks will be described as an example in association with the comparative example described above with reference to Figure 7.

The parallel computing device according to this embodiment calculates the required operation frequency of the subsequent cycle from the expected duration T2 of the subsequent combustion cycle. And the parallel computing device determines whether to activate the core 2 or not based on whether the required operation frequency of the subsequent cycle is higher than the threshold frequency fc or not. If the required operation frequency is higher than the threshold frequency fc, the activation processing for the core 2 is performed in the subsequent cycle. Furthermore, in the same cycle, the tasks are allocated to the cores 1 and 2, and the parallel computation by the cores 1 and 2 is started. That is, according to this embodiment, task processing by the parallel computation starts in the additional core activation cycle in which the activation processing for the core 2 is performed.

In the cycle in which the parallel computation by the cores 1 and 2 is performed, an operation frequency that minimizes the power consumption within a range in which the processing completion time does not exceed the combustion cycle duration T2 is set as the required operation frequency of each core. In the computation of the required operation frequency, not only the computation amount required for processing of the tasks allocated to each core but also the overhead due to the communication between the cores are taken into consideration. However, in the additional core activation cycle, the activation processing for the core 2 is needed before the communication between the cores and the parallel computation. In the additional core activation cycle, the core 1 cannot start computation until the core 2 is activated and the communication between the cores is established. Therefore, the effective time that can be used by the cores for communication between the cores and for parallel computation in the additional core activation cycle is the combustion cycle duration T2 minus the time required for the activation processing for the core 2. That is, the effective processing completion time required in the additional core activation cycle is shorter than the processing completion time for the subsequent cycles in which the activation of the core 2 is completed. In view of this, in the additional core activation cycle, the parallel computing device according to this embodiment does not make the cores 1 and 2 operate at the operation frequency optimized for the combustion cycle duration T2 but makes the cores 1 and 2 operate at a higher operation frequency.

The computational capacity of each core increases as the operation frequency increases. Therefore, even if the effective processing completion time required for each core decreases by the time required for activation of the core 2, all the tasks can be processed in the effective required processing completion time. In other words, the parallel computing device according to this embodiment can prevent a missing task when the number of cores used for task processing is increased, as with the parallel computing device according to the first embodiment.

The controlling method used when an additional core is activated described above is implemented by the parallel computing device according to this embodiment performing the routine shown in the flowchart of Figure 14. The routine is performed when a single-core computation is performed by one core. Note that, of the processings shown in the flowchart of Figure 14, the same steps as those in the flowchart showing the first embodiment are denoted by the same step numbers.

In the flowchart of Figure 14, in the first step S102, it is determined whether activation of an additional core is required or not. In step S104, based on the result of the determination in step S102, it is determined whether to activate an additional core or not. Details of steps S102 and S104 are as described with regard to the first embodiment. When an additional core is to be activated, the processing of step S108 is performed.

In step S108, in the cycle subsequent to the cycle in which it is determined whether activation of an additional core is required or not, the activation processing for an additional core is performed. Once the activation of the additional core is completed, the processing of step S110 is performed.

In step S110, in the additional core activation cycle, the tasks are allocated to both the operating core and the additional core, and the parallel computation by the two cores is started. At the same time, the driving voltage of the operating core and the driving voltage of the additional core are temporarily increased to increase the operation frequency of both the cores. Since the computational capacity of both the cores increases as the operation frequency increases, processing of all the tasks can be completed in the required processing completion time.

If no additional core is to be activated, the processings of steps S108 and S110 described above are skipped. In that case, only the one operating core continues processing the tasks. In the cycles subsequent to the additional core activation cycle, the tasks are processed by parallel computation by the two cores as in the additional core activation cycle. However, the effective processing completion time is shortened due to the additional core activation processing only in the additional core activation cycle, and the operation frequency can be set at the operation frequency optimized for the combustion cycle duration T2 in the subsequent cycles. Therefore, the period in which the driving voltage and the operation frequency are increased when an additional core is activated can be at most the period of the additional core activation cycle, that is, a temporary period.

### Modifications

The present invention is not limited to the embodiments described above, and various modifications can be made to the present invention without departing from the spirit of the present invention. For example, the following modifications are possible.

In the first embodiment, when an additional core is to be activated, the driving voltage of the operating core is increased to increase the operation frequency thereof in the additional core activation cycle. However, the period in which the driving voltage is increased to increase the operation frequency may be limited to the period in which the operating core is actually performing computation for task processing.

In the first embodiment, when any of the cores is to be stopped, the driving voltage of the core that continues operating is increased to increase the operation frequency thereof in the core stop cycle. However, the period in which the driving voltage is increased to increase the operation frequency may be limited to the period in which the core that continues operating is actually performing computation for task processing.

In the second embodiment, when an additional core is to be activated, the driving voltage of both the operating core and the additional core is increased to increase the operation frequency thereof in the additional core activation cycle. However, the period in which the driving voltage is increased to increase the operation frequency may be limited to the period in which the operating core and the additional core are actually performing computation for task processing.

The controlling method used when an additional core is activated according to the first embodiment may be applied to a case where a new core is additionally activated while a plurality of cores is performing parallel computation. When the number of cores used for parallel computation is increased, the processing completion time required for each operating core in the cycle in which the additional core activation processing is performed is shorter than that of the preceding cycle. In that case, if the operation frequency of each of the operating cores is temporarily increased, all the tasks can be processed in the required processing completion time.

The controlling method used when any of the cores is stopped according to the first embodiment may be applied to a case where any of the cores is stopped while a plurality of cores is performing parallel computation. When the number of cores used for parallel computation is decreased, an overhead occurs for transferring information from the core to be stopped to each of the cores that continue operating. In that case, if the operation frequency of each of the cores that continue operating is temporarily increased, all the tasks can be processed in the required processing completion time.

The controlling method used when an additional core is activated according to the second embodiment may be applied to a case where a new core is additionally activated while a plurality of cores is performing parallel computation. When parallel computation using not only the already operating cores but also the additional core is started in the cycle in which the additional core is activated, the effective processing completion time required for the operating cores and the additional core decreases by the time required for the activation processing for the additional core. In that case, if the operation frequency of each of the operating cores and the additional core is temporarily increased, all the tasks can be processed in the required processing completion time.

### Reference Signs List

- 100: parallel computing device
- 102: core
- 104: CPU
- 106: local memory
- 108: frequency and voltage controlling unit
- 110: bus

## Claims

1. A multi-core parallel computing device that repeatedly processes a plurality of tasks having a restricted processing completion time using one or more cores having a variable operation frequency,
wherein, when allocating the plurality of tasks to a new core to be additionally activated and an operating core, the parallel computing device increases the operation frequency of the operating core.

2. The parallel computing device according to claim 1, wherein the parallel computing device allocates the plurality of tasks to the new core and the operating core in a cycle subsequent to a cycle in which the new core is activated, and increases the operation frequency of the operating core in the cycle in which the new core is activated.

3. The parallel computing device according to claim 1, wherein the parallel computing device allocates the plurality of tasks to the new core and the operating core in a cycle in which the new core is activated, and increases the operation frequency of the operating core in the cycle.

4. The parallel computing device according to claim 3, wherein the parallel computing device also increases the operation frequency of the new core in the cycle subsequent to the cycle in which the new core is activated.

5. A multi-core parallel computing device that repeatedly processes a plurality of tasks having a restricted processing completion time using one or more cores having a variable operation frequency,
wherein, when stopping any of operating cores and allocating the plurality of tasks to a core that continues operating, the parallel computing device increases the operation frequency of the core that continues operating.

6. The parallel computing device according to claim 5, wherein the parallel computing device allocates the plurality of tasks to the core that continues operating in a cycle in which the any of the cores is stopped, and increases the operation frequency of the core that continues operating in the cycle.
